# EUROPÄISCHE PATENTANMELDUNG

(11) **EP 3 336 007 A1**
(43) Veröffentlichungstag der Anmeldung: **20.06.2018**
(21) Anmeldenummer: 17207208.4
(22) Anmeldetag: 14.12.2017
(51) Int. Cl.: B65D 81/03, B65D 81/05, B65D 71/00

(54) **LADUNGSSICHERUNGSSYSTEM UND VERFAHREN ZUR LADUNGSSICHERUNG**

(30) Priorität: 19.12.2016 DE 102016225442
(71) Anmelder: Schott AG, 55122 Mainz (DE)
(72) Erfinder: DREßEL, Andreas, 95666 Mitterteich (DE)
(74) Vertreter: Mehler Achler

(57) **Zusammenfassung**

Die Erfindung betrifft ein Ladungssicherungssystem mit wenigstens zwei aufblasbaren Polsterelementen (14, 15) und Befestigungsmitteln zum Anbringen der Polsterelemente an einem Transportgut (10), wobei die wenigstens zwei Polsterelemente (14, 15) mittels eines Verbindungsschlauches (20) fluidisch miteinander verbunden sind. Das Ladungssicherungssystem weist mehrere separate Anschlussstücke auf. Das Verfahren zur Ladungssicherung sieht vor, die aufblasbaren Polsterelemente (14, 15) mittels Befestigungsmitteln an dem Transportgut (10) anzubringen, das Transportgut (10) anschließend zu verladen und die wenigstens zwei Polsterelemente (14, 15) anschließend in einem gemeinsamen Schritt mittels einem von mehreren separaten Anschlussstücken mit einem Gas zu befüllen, wobei eine Gasquelle mit nur einem der zwei Polsterelemente (14, 15) oder an dem Verbindungsschlauch (20) fluidisch verbunden wird.

## Beschreibung

Die Erfindung betrifft ein Ladungssicherungssystem mit mindestens zwei aufblasbaren Polsterelementen und Befestigungsmitteln zum Anbringen der Polsterelemente an einem Transportgut. Die Erfindung betrifft ferner ein Verfahren zur Ladungssicherung mittels eines solchen Ladungssicherungssystems und die Verwendung des Ladungssicherungssystems zur Sicherung von zu Bündeln zusammengefassten Glasrohren.

Gattungsgemäße Ladungssicherungssysteme dienen der Sicherung größerer Transportgüter innerhalb eines Frachtraums, der beispielsweise von einem Frachtcontainer oder von Lastkraftwagen, Anhängern, Eisenbahnwagons, oder sonstigen Transportmitteln bereitgestellt wird. Die Transportgüter bestehen meist aus Stückgut, welches einzeln oder auch in Gebinden zusammengefasst beispielsweise auf einer Palette verladen wird. Die Gebinde sind oftmals mit Hilfe einer Folie oder anderen Haltemitteln fixiert.

Derart bestückte Paletten oder Transportgüter müssen zusätzlich gegen ein Verschieben und/oder Kippen innerhalb des Frachtraums gesichert werden, da die Fracht beim Transport häufig Längs- und Querkräften ausgesetzt ist. Deshalb werden bereits unmittelbar beim Verladen der einzelnen Paletten oder Transportgüter in den Frachtraum Stützkörper in die Zwischenräume zwischen benachbarten Transportgütern bzw. Paletten und auch zwischen den Transportgütern bzw. Paletten und den Wänden des Frachtraumes angeordnet. Zu diesem Zweck werden bekanntlich Kartonplatten oder eben auch luftgefüllte Polster eingesetzt.

Eine gängige Vorgehensweise ist es, die Polsterelemente einzeln und ohne Befestigung an dem Transportgut in den Zwischenräumen zu platzieren und anschließend mit Luft zu befüllen, bis diese expandiert zwischen den Transportgütern oder Paletten festklemmen. Schwierig ist dabei die anfängliche Positionierung der Polsterelemente, insbesondere dann, wenn beispielsweise spezielle Transportgüter eine Abstützung an nur vereinzelten Stellen erlauben.

Es gibt auch Frachträume, in denen aufblasbare Polster vor dem Beladen beispielsweise entlang der Frachtraumwand fest installiert sind. In diesem Zusammenhang wird beispielhaft auf die Schrift DE 22 53 304 B verwiesen. Darin beschrieben ist ein Frachtraum für den Transport von Paletten mit Warenstapeln, bei dem zwischen den einzelnen Warenstapeln aufblasbare Säcke angeordnet sind, die eine Verschiebung der Warenstapel verhindern sollen. Der Frachtraum ist mittels Trennwänden in aufeinanderfolgende Kammern unterteilt, in denen jeweils eine Palette Platz findet. Die Trennwände sind aus umlaufenden Trennrahmen gebildet, in deren Rahmenöffnung die aufblasbaren Säcke ortsfest angeordnet sind. Die Trennwände mit den Polstern bilden ein fest vorgegebenes Raster und sind daher nicht individuell auf die Form und Belastbarkeit der Transportgüter angepasst. Als Bestandteile des Frachtraums bilden die Säcke somit kein gattungsgemäßes Ladungssicherungssystem, welches dadurch ausgezeichnet ist, dass es unmittelbar an dem Transportgut anbringbar ist, wodurch eine höhere Flexibilität und ein besserer Schutz ermöglicht wird.

Eine andere Lösung ist beispielsweise aus der Schrift DE 299 12 047 U1 bekannt. Die darin diskutierte Transportvorrichtung besteht aus einer Palette und einem doppelwandigen Haltemittel, welches an dem auf der Palette aufgeschichteten Gebinde angreift und dieses fixiert. Zu diesem Zweck weist das Haltemittel Befestigungsmittel zum Befestigen an oder auf den Waren und/oder der Palette auf. Ferner weist das doppelwandige Haltemittel einen Hohlraum auf, der mit Druckluft befüllt werden kann und aufgrund der Expansion das Transportgut aneinander bzw. auf die Palette drückt. Zweck des Haltemittels ist demnach also die Fixierung des Transportgutes auf einer Palette.

Die DE 89 04 373 U1 offenbart eine wiederverwendbare Verpackung, die aus zwei ringförmigen Schläuchen besteht, die durch insgesamt vier weitere Schläuche oder Streben verbunden sind und auf Abstand gehalten werden. Die Schläuche weisen bevorzugt einen gemeinsamen Hohlraum auf. Daher ist auch nur ein Ventil zum Befüllen und Entleeren des Hohlraums vorgesehen. Die einzelnen Schläuche können jeweils einen eigenen Hohlraum aufweisen können, wobei dann jeder Hohlraum bzw. jeder Schlauch mit einem Ventil ausgerüstet ist. Vorgeschlagen wird zudem, die einzelnen Elemente der Verpackung mit Sicherungselementen, insbesondere Bändern oder Riemen, an dem zu verpackenden Gegenstand zu fixieren.

Aus der EP 0 394 497 A1 geht ein Verpackungssystem mit mehreren Luftkissen hervor. Die Luftkissen sind durch einen gemeinsamen Luftkanal miteinander verbunden, wobei der Luftkanal innerhalb jedes Luftkissens ein Ventil aufweisen soll. Mittels des gemeinsamen Luftkanals kann Luft in die Luftkissen eingebracht werden, wodurch diese aufgeblasen werden. Die Ventile sind selbstschließend, so dass keine Luft entweichen kann.

Die DE 694 14 242 T2 offenbart ebenfalls aufblasbare Verpackungselemente, die als Eckenschützer eingesetzt werden sollen. Dabei offenbart diese Druckschrift ein System mit vier Eckenschützern, die über ein gemeinsames Kanalsystem miteinander verbunden sind. Das Kanalsystem weist ein einziges Ventil für die Befüllung aller vier Eckenschützer mit Luft auf.

Auch die US 2016/0340102 A1 offenbart aufblasbare Verpackungselemente, die insbesondere für Ecken vorgesehen sind. Die einzelnen Verpackungselemente sind jedoch nicht fluidisch miteinander verbunden. Es wird vorgeschlagen, dass die Verpackungselemente mittels Bändern an dem zu verpackenden Gegenstand befestigt werden.

Die US 5,833,413 offenbart ein Ladesystem für einen LKW, bei dem aufblasbare Elemente mittels eines Netzes aus Gurten in einem Laderaum eines LKWs fixiert werden können und auf diese Weise als Barriere für verladene Güter dienen. Die aufblasbaren Elemente weisen auch hier jeweils genau ein Ventil auf, sind jedoch höchstens beim Aufblasen, nicht aber während des Transports fluidisch miteinander verbunden.

Die DE 20 2015 102 867 U1 zeigt einen Transportbehälter, der aus zwei wannenförmigen, halbschalenartigen Hohlkörpern besteht. Die Hohlkörper sind aufblasbar, in befülltem Zustand formstabil und nach Art eines Koffers miteinander verbunden. In dem Innenraum der zwei wannenförmigen Hohlkörper kann ein Transportgegenstand angeordnet werden, der auf diese Weise vor Erschütterung geschützt wird. Es wird auch vorgeschlagen, die beiden mit Luft befüllbaren Hohlräume der Hohlkörper miteinander zu verbinden und mittels eines gemeinsamen Füllventils zu befüllen. Alternativ wird vorgeschlagen, jede der Ringkammern der Hohlkörper mit einem separaten Füllventil zu versehen. Eine weitere Alternative besteht darin, die Ringkammern in mehrere separate Kammern zu unterteilen.

Aufgabe der vorliegenden Erfindung ist es, ein Ladungssicherungssystem und ein Verfahren zur Ladungssicherung bereitzustellen, welche eine einfache Handhabung auch bei besonderen Transportgütern erlauben.

Die Aufgabe wird durch ein Ladungssicherungssystem gemäß Anspruch 1 und ein Verfahren zur Ladungssicherung gemäß Anspruch 7 gelöst. Das erfindungsgemäße Ladungssicherungssystem der eingangs genannten Art sieht vor, dass die wenigstens zwei Polsterelemente mittels eines Verbindungsschlauches fluidisch miteinander verbunden sind. Zudem weist das erfindungsgemäße Ladungssicherungssystem mehrere separate Anschlussstücke auf.

Die fluidische Verbindung erlaubt ein einfaches Befüllen der wenigstens zwei Polsterelemente in einem Schritt, da nicht jedes der Polsterelemente einzeln befüllt werden muss. Dies verkürzt die Verladedauer und nicht einmal muss jedes einzelne Polsterelement in den meist beengten Frachträumen zum Zweck des Befüllens zugänglich sein. Zudem bewirkt die fluidische Verbindung einen Druckausgleich zwischen den verbundenen Polsterelementen auch während des Transports. Dies ist im Vergleich mit fluidisch getrennten Einzelelementen vorteilhaft, wenn ein lokal auftretender Druck zunächst nur auf eines der Polsterelemente wirkt. Durch den Druckausgleich in dem erfindungsgemäßen System verteilt sich der Druck allmählich auf beide Polster und damit auf eine größere Fläche, was die Gefahr von Transportbeschädigungen reduziert. Zugleich findet der Druckausgleich durch den Verbindungsschlauch verlangsamt statt, weil dieser die Strömung drosselt. Diese Dämpfung trägt dazu bei, dass die verbundenen Polsterelemente das Transportgut dennoch ausreichend stützen. Zugleich sind die Polsterelemente bis auf die Schlauchverbindung körperlich voneinander getrennt, so dass sie individuell und mit größtmöglicher Flexibilität an dem Transportgut angebracht werden können.

Das erfindungsgemäße Verfahren zur Ladungssicherung mittels eines mehrere separate Anschlussstücke aufweisenden Ladungssicherungssystems sieht dementsprechend vor, dass die wenigstens zwei aufblasbaren Polsterelemente, die mittels eines Verbindungsschlauches fluidisch miteinander verbunden sind, mittels Befestigungsmitteln an einem zu verladenden Transportgut angebracht werden, das Transportgut anschließend verladen wird und die wenigstens zwei Polsterelemente anschließend in einem gemeinsamen Schritt mittels einem der Anschlussstücke mit einem Gas befüllt werden, wobei eine Gasquelle mit nur einem der zwei Polsterelemente oder dem Verbindungsschlauch fluidisch verbunden wird.

Als Gas kommt vorzugsweise Luft in Betracht. Die Gasquelle kann vorzugsweise ein Gebläse oder eine Pumpe sein.

Durch das vorherige Anbringen der Befestigungsmittel unmittelbar an dem zu verladenden Transportgut kann sichergestellt werden, dass die Polsterung genau an den erforderlichen Stellen zum Einsatz kommt, ohne dass diese vor Ort in dem beengten Frachtraum angehalten werden muss. Die fluidische Verbindung sorgt sogleich dafür, dass nach dem Verladen auch ansonsten schwer oder gar nicht mehr zugängliche Polsterelemente auf einfache Weise mit dem Gas befüllt werden können.

Vorzugsweise sind die Befestigungsmittel flexibel. Dies stellt sicher, dass das Polsterelement beim Befüllen nicht durch die Befestigungsmittel dergestalt fixiert ist, dass sich Einschnürungen oder dergleichen bilden, die ein Expandieren der Polsterelemente behindern können.

Bevorzugt umfassen die Befestigungsmittel ein Band und besonders bevorzugt ein dehnbares Band, mit dem die Polsterelemente an dem Transportgut anbindbar sind bzw. angebunden werden.

Verfahrensmäßig geschieht dies bevorzugt dadurch, dass zunächst das dehnbare Band an dem Transportgut angebunden wird, indem es zunächst über das Transportgut gespannt wird, und anschließend die wenigstens zwei Polsterelemente zwischen das Band und das Transportgut geklemmt werden.

Bevorzugt weist eines der wenigstens zwei aufblasbaren Polsterelemente und/oder der Verbindungsschlauch ein Anschlussstück zum Befüllen auf.

Das Anschlussstück dient zur Verbindung mit der Gasquelle. Es weist besonders bevorzugt ein Ventil auf. Die Anschlussstücke bzw. Ventile sind jedenfalls zum Befüllen und wahlweise auch zum Entleeren geeignet. In letzterem Fall sind die Polsterelemente wiederverwendbar.

Im Grunde genügt je Ladungssicherungssystem ein Anschlussstück, da alle davon umfassten Polsterelemente erfindungsgemäß mittels des Verbindungsschlauchs fluidisch miteinander verbunden sind. Allerdings weist das erfindungsgemäße Ladungssicherungssystem mehrere und besonders bevorzugt jedes der Polsterelemente ein separates Anschlussstück auf, damit beim Anbringen der Polsterelemente an dem Transportgut und Verladen desselben nicht auf die Lage der Anschlussstücke geachtet werden muss und trotzdem stets ein Anschlussstück leicht zugänglich ist. Für eine gleichmäßigere Befüllung der wenigstens zwei Polsterelemente ist es vorteilhaft, wenn ein Anschlussstück im Bereich des Verbindungsschlauches und besonders bevorzugt in der Mitte des Verbindungsschlauches angeordnet ist.

Eine erfindungsgemäße Verwendung des Ladungssicherungssystems dient der Sicherung von zu Bündeln zusammengefassten Glasrohren, welche Bündel auf einer Palette aufgestapelt sind. Wenigstens zwei aufblasbare Polsterelemente, die wiederum mittels eines Verbindungsschlauches fluidisch miteinander verbunden sind, werden wie vorstehend beschreiben mittels Befestigungsmitteln an der gleichen Seite des Stapels jeweils nahe dem vorderen und nahe dem hinteren Enden der Glasrohrbündel voneinander beabstandet angebracht. Die Palette wird anschließend verladen und die wenigstens zwei Polsterelemente in einem gemeinsamen Schritt mit einem Gas befüllt, wobei eine Gasquelle mit nur einem der zwei Polsterelemente oder dem Verbindungsschlauch fluidisch verbunden wird.

Weitere Merkmale und Vorteile der Erfindung werden nachfolgend anhand eines Ausführungsbeispiels beschrieben.

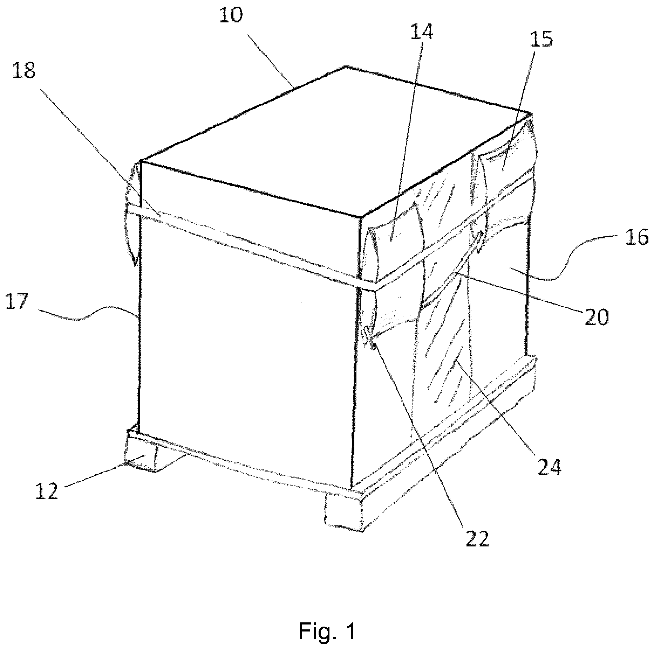

- Figur 1: zeigt das erfindungsgemäße Ladungssicherungssystem an einem Transportgut auf einer Palette in perspektivischer Darstellung.

In Figur 1 ist ein Transportgut 10 beispielhaft als rechteckiger Kasten dargestellt, der auf einer Palette 12 angeordnet ist. Der Kasten kann beispielsweise aus einem Gebinde von mehreren einzeln aufgeschichteten Transportgütern zusammengesetzt sein. Zwecks Fixierung können die Transportgüter in bekannter Weise mit einer Kunststofffolie umwickelt sein. Es versteht sich, dass anstelle des rechteckigen Kastens ein Transportgut auch jedwede andere Form annehmen kann.

Das Transportgut 10 weist in seinem oberen Bereich ein Ladungssicherungssystem mit zwei aufblasbaren Polsterelementen 14 und 15 auf der dem Betrachter zugewandten Längsseite 16 der Palette 12 auf. Die gleiche Anordnung befindet sich auch auf der dem Betrachter abgewandten Längsseite 17 der Palette 12. Die Polsterelemente 14, 15 sind mittels eines Befestigungsmittels in Form eines dehnbaren Bandes 18 an dem Transportgut 10 angebunden. Das Band 18 läuft umfänglich um das Transportgut 10 herum und umschlingt auf diese Weise auch die auf der gegenüberliegenden Seite angeordneten Polsterelemente.

Das dehnbare Band 18 kann endlos ausgeführt sein und wird dann zum Befestigen von der Oberseite her über das Transportgut übergestreift. Anschließend werden die Polsterelemente 14, 15 zwischen dem Band und der Seite des Transportgutes festgeklemmt.

Alternativ kann das Band auch offen ausgestaltet sein und um das Transportgut 10 herumgeschlungen und dann beispielsweise verknotet werden oder nach dem Herumschlingen adhäsiv an der Oberfläche des Transportgutes und/oder an benachbarten Lagen des Bandes befestigt sein. Wahlweise kann auch ein Spannband verwendet werden, welches mit einer Spannvorrichtung nach dem Umschlingen des Transportgutes 10 zusammengezogen und fixiert wird. Das Fixieren kann wiederum so erfolgen, dass das Band zerstörungsfrei oder nicht zerstörungsfrei gelöst werden kann. In diesen Fällen kann das Band auch weniger bis gar nicht dehnbar sein. Als Befestigungsmittel kommen beispielsweise auch Klettbänder, Gewebebänder, Gummibänder oder Kunststofffolienbänder in Betracht.

Die beiden Polsterelemente 14, 15 sind mittels eines Verbindungsschlauches 20 fluidisch miteinander verbunden. Ferner weist das Polsterelement 14 ein Anschlussstück 22 auf, über welches zunächst das Polsterelement 14 und via Verbindungsschlauch 20 schließlich auch das Polsterelement 15 mit einem Gas, vorzugsweise Luft, befüllt werden können. Ähnliches gilt für die beiden auf der abgewandten Seite angeordneten Polsterelemente. Wahlweise können jene Polsterelemente aber auch über einen weiteren Verbindungschlauch mit einem der beiden Polsterelemente 14 oder 15 verbunden sein, so dass sämtliche Polsterelemente in einem Arbeitsgang befüllt werden können. Selbstverständlich können je nach Anforderung weitere Polsterelemente an den beiden Stirnseiten, auf der Oberseite oder weiter im unteren Bereich des Transportgutes 10 nahe der Palette 12 angeordnet werden. Die Polsterelemente können im Übrigen auch unterschiedliche Größe und Gestalt haben.

In Figur 1 wird angenommen, dass das Transportgut 10 entlang der Längsseiten 16, 17 in dem schraffierten Bereich 24 nicht mittels Polsterelement abgestützt werden kann. Dies könnte beispielsweise daran liegen, dass sich an jener Stelle ein Hohlraum befindet, so dass eine Abstützung hierüber nicht erfolgen kann. Ein anderer Einsatzfall könnte sein, dass das Transportgut in dem Bereich 24 nicht abgestützt werden darf, weil hier eine erhöhte Bruchgefahr oder Druckempfindlichkeit besteht. In solchen Anwendungsfällen kommt ein großes, die vollständige Längsseite des Transportgutes 10 belastendes Luftpolster nicht in Betracht. Deshalb sind die mindestens zwei räumlich getrennten Polsterelemente 14, 15 vorgesehen. Damit diese sich beim Verladen und Befüllen genauso einfach handhaben lassen wie ein einzelnes Polsterelement, sieht die Erfindung eben jenen Verbindungsschlauch 20 vor. Das Anbringen mittels Befestigungsmittel vor dem Verladen vereinfacht die Arbeit ein weiteres Mal.

Ein Anwendungsfall ist die erfindungsgemäße Verwendung des Ladungssicherungssystems zur Sicherung von zu Bündeln zusammengefassten Glasrohren. Besonders bevorzugt sind die einzelnen Glasrohre in dichtester Packung zu handlichen Bündel gepackt und an beiden Rohrenden jeweils mittels einer Folie, vorzugsweise einer Schrumpffolie aus Polyethylen (PE) zusammengehalten. Dies verleiht dem Bündel eine hohe Formstabilität ohne zusätzliche stützende Abstandselemente und schützt die einzelnen Rohre vor einem Verschieben relativ zueinander. Die Gefahr des Verkratzens und von Punktberührungen und damit Bruchgefahr werden somit vermindert. Das Folienmaterial gibt zudem keinen Abrieb wie beispielweise Papier oder Karton ab und verschließt zugleich die Rohrenden. Verunreinigungen werden auf diese Weise zweifach vermieden. Außerdem ist die Folie durchsichig, sodass eine Sichtkontrolle ohne Entfernung der Verpackung erfolgen kann. Und schließlich ist das Folienmaterial sehr dünn und minmiert deshalb das Verpackungsvolumen.

Solche Bündel sind stapelfähig und können deshalb auf einer Palette 12 aufgestapelt werden. Es hat sich als vorteilhaft erwiesen, zusätzlich eine Schrumpfhaube über die Palette mit den gestapelten Bündeln zu ziehen. Die Schrumpfhaube kann ebenfalls aus PE bestehen. Die Schrumpfhaube verleiht dem gesamten Stapel zusätzliche Stabilität und Festigkeit und verschließt den Stapel dicht gegen Umwelteinflüsse.

Während die Rohrbündel an den Rohrenden, wo sie mittels der Folie zusammengehalten werden und sich gegenseitig stützen, eine hohe Druckbelastbarkeit aufweisen, ist diese in der Rohrmitte vermindert, weil dort weniger gegenseitiger Halt besteht. Deshalb sind an einem solchen Stapel an der gleichen Seite des Stapels vorteilhafter Weise wenigstens zwei der aufblasbaren Polsterelemente 14, 15, die mittels eines Verbindungsschlauches 20 fluidisch miteinander verbunden sind, mittels Befestigungsmitteln jeweils nahe dem vorderen und nahe dem hinteren Enden der Glasrohre bzw. Glasrohrbündel voneinander beabstandet anzubringen. Die Palette kann so anschließend verladen werden und die wenigstens zwei Polsterelemente 14, 15 im verladenen Zustand auf einmal mit einem Gas (Luft) befüllt werden, wobei die Gasquelle mit nur einem der zwei Polsterelemente 14, 15 oder dem Verbindungsschlauch 20, je nachdem, was am leichtesten zugänglich ist, verbunden werden muss.

### Bezugszeichenliste

- 10: Transportgut
- 12: Palette
- 14: aufblasbares Polsterelement
- 15: aufblasbares Polsterelement
- 16: Längsseite
- 17: Längsseite
- 18: Band
- 20: Verbindungsschlauch
- 22: Anschlussstück

## Patentansprüche

1. Ladungssicherungssystem mit wenigstens zwei aufblasbaren Polsterelementen (14, 15) und Befestigungsmitteln zum Anbringen der Polsterelemente an einem Transportgut (10),
wobei die wenigstens zwei Polsterelemente mittels eines Verbindungsschlauches (20) fluidisch miteinander verbunden sind,
**dadurch gekennzeichnet, dass** das Ladungssicherungssystem mehrere separate Anschlussstücke (22) aufweist.

2. Ladungssicherungssystem nach Anspruch 1,
**dadurch gekennzeichnet, dass** die Befestigungsmittel flexibel sind.

3. Ladungssicherungssystem nach Anspruch 1 oder 2,
**dadurch gekennzeichnet, dass** die Befestigungsmittel ein Band (18) umfassen, mit dem die Polsterelemente (14, 15) an dem Transportgut (10) anbindbar sind.

4. Ladungssicherungssystem nach einem der vorstehenden Ansprüche,
**dadurch gekennzeichnet, dass** eines der wenigstens zwei aufblasbaren Polsterelemente (14, 15) und/oder der Verbindungsschlauch (20) ein Anschlussstück (22) zum Befüllen aufweist.

5. Ladungssicherungssystem nach Anspruch 4,
**dadurch gekennzeichnet, dass** das Anschlussstück (22) ein Ventil umfasst.

6. Ladungssicherungssystem nach einem der vorstehenden Ansprüche,
**dadurch gekennzeichnet, dass** jedes der Polsterelemente (14, 15) ein separates Anschlussstück (22) aufweist.

7. Verfahren zur Ladungssicherung mittels eines mehrere separate Anschlussstücke (22) aufweisenden Ladungssicherungssystems, bei dem wenigstens zwei aufblasbare Polsterelemente (14, 15) des Ladungssicherungssystems, die mittels eines Verbindungsschlauches (20) fluidisch miteinander verbunden sind, mittels Befestigungsmitteln an einem zu verladenden Transportgut (10) angebracht werden, das Transportgut (10) anschließend verladen wird und die wenigstens zwei Polsterelemente (14, 15) anschließend in einem gemeinsamen Schritt mittels einem der Anschlussstücke (22) mit einem Gas befüllt werden, wobei eine Gasquelle mit nur einem der zwei Polsterelemente (14, 15) oder dem Verbindungsschlauch (20) fluidisch verbunden wird.

8. Verfahren nach Anspruch 7,
**dadurch gekennzeichnet, dass** die wenigstens zwei Polsterelemente (14, 15) an der gleichen Seite des Transportgutes (10) voneinander beabstandet angebracht werden.

9. Verfahren nach Anspruch 7 oder 8,
**dadurch gekennzeichnet, dass** die wenigstens zwei Polsterelemente (14, 15) mittels eines Bandes (18) an dem Transportgut (10) angebunden werden.

10. Verfahren nach Anspruch 9,
**dadurch gekennzeichnet, dass** die wenigstens zwei Polsterelemente (14, 15) mittels eines dehnbaren Bandes (18) an dem Transportgut (10) angebunden werden, indem das Band (18) zunächst über das Transportgut (10) gespannt wird und anschließend die wenigstens zwei Polsterelemente (14, 15) zwischen das Band und das Transportgut geklemmt werden.

11. Verwendung des Ladungssicherungssystems mit mehreren separaten Anschlussstücken (22) nach einem der Ansprüche 1 bis 6 zur Sicherung von zu Bündeln zusammengefassten Glasrohren, welche Bündel auf einer Palette (12) aufgestapelt sind, wobei wenigstens zwei aufblasbare Polsterelemente (14, 15), die mittels eines Verbindungsschlauches (20) fluidisch miteinander verbunden sind, mittels Befestigungsmitteln an der gleichen Seite des Stapels jeweils nahe dem vorderen und nahe dem hinteren Enden der Glasrohrbündel voneinander beabstandet angebracht werden, die Palette anschließend verladen wird und die wenigstens zwei Polsterelemente (14, 15) anschließend in einem gemeinsamen Schritt mittels einem der Anschlussstücke (22) mit einem Gas befüllt werden, wobei eine Gasquelle mit nur einem der zwei Polsterelemente (14, 15) oder dem Verbindungsschlauch (20) fluidisch verbunden wird.
